# FASCICULE DE BREVET EUROPEEN

(11) **EP 0 893 875 B1**
(45) Date de publication et mention de la délivrance du brevet: **02.01.2002**
(21) Numéro de dépôt: 98410070.1
(22) Date de dépôt: 19.06.1998
(51) Int. Cl.: H02M 1/12, H02M 7/06

(54) **Dispositif d'ajustement du courant de charge d'un condensateur de stockage**
Speicherkondensator-Ladestromeinstellungsvorrichtung
Storage capacitor charge current adjustment device

(30) Priorité: 24.06.1997 FR 9708165
(43) Date de publication de la demande: 27.01.1999
(73) Titulaire: STMicroelectronics S.A., 92120 Montrouge (FR)
(72) Inventeur: Bailly, Alain, 13109 Simiane Collongue (FR)
(74) Mandataire: de Beaumont, Michel

(56) Documents cités:
- FR-A- 2 742 010
- PATENT ABSTRACTS OF JAPAN vol. 007, no. 132 (E-180), 9 juin 1983 & JP 58 046868 A (TOUSHIBA DENZAI KK), 18 mars 1983
- PATENT ABSTRACTS OF JAPAN vol. 018, no. 570 (E-1623), 31 octobre 1994 & JP 06 209574 A (SONY CORP), 26 juillet 1994

## Description

La présente invention concerne les circuits d'alimentation du type à redresseur et condensateur de stockage, destinés à alimenter une charge par l'intermédiaire d'un circuit de régulation tel qu'un circuit à découpage.

A l'heure actuelle, de nombreux appareils alimentés électriquement à partir du secteur incluent une alimentation à découpage. L'énergie est extraite du réseau sous forme de pics de courant de courtes durées. Ces pics de courant perturbent l'efficacité du réseau. Les effets dus à ces pics de courant empirent avec le nombre d'appareils connectés au réseau et incorporant une alimentation à découpage. Par suite, les compagnies de distribution électrique ont imposé diverses normes pour améliorer le facteur de puissance des alimentations.

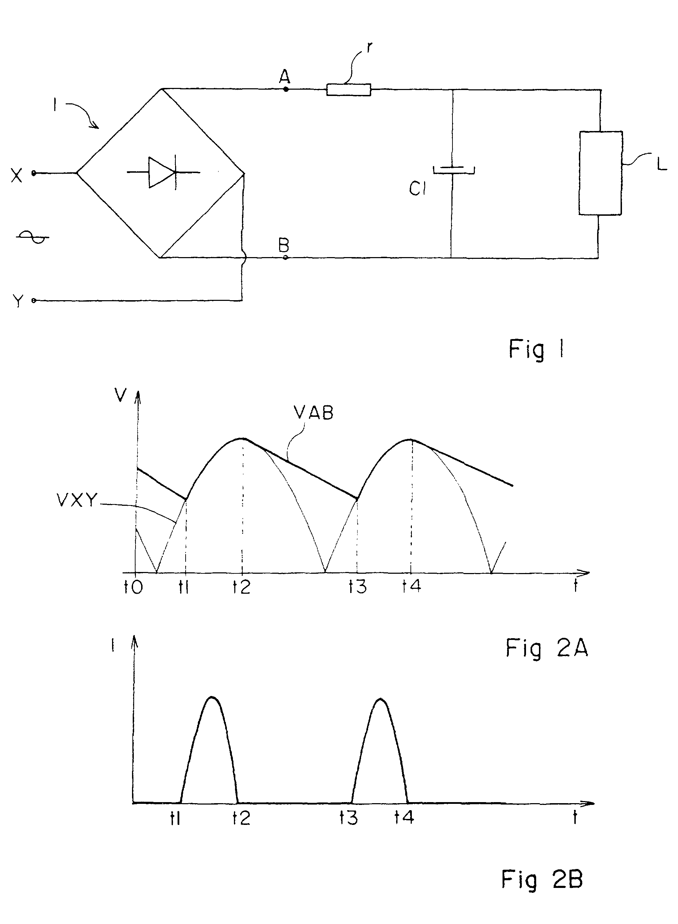

La figure 1 représente un schéma classique de fourniture d'une alimentation continue à partir du secteur. Des bornes X et Y de l'alimentation alternative sont connectées à des bornes d'entrées d'un pont redresseur 1 dont des bornes de sorties A et B sont connectées à un condensateur de stockage C1 et à une charge L. On considérera que cette charge L incorpore un circuit de régulation, par exemple une alimentation à découpage, connectée à une charge. En outre, on trouve souvent en série avec le condensateur C1 une résistance de faible valeur r destinée à limiter les appels du courant du système lors de la mise en route.

La figure 2A représente, en fonction du temps, la tension du secteur V_{XY} redressée et la tension V_{AB}, entre les bornes A et B (en négligeant l'effet de la résistance r). On suppose qu'à un instant t0, la tension aux bornes du condensateur C1 est plus élevée que la tension du secteur. Alors, la tension entre les bornes A et B correspond à la tension aux bornes du condensateur C1 qui se décharge progressivement dans la charge L. A partir d'un instant t1, la tension redressée du secteur devient supérieure à la tension aux bornes du condensateur et c'est le secteur qui assure l'alimentation de la charge L et la recharge du condensateur C1. A partir d'un instant t2, la tension sur le condensateur devient supérieure à la tension du secteur et, de nouveau, le condensateur alimente la charge. Ceci se répète à l'alternance suivante (instants t3 et t4).

La figure 2B représente l'allure du courant extrait du secteur entre les instants t1-t2 et t3-t4. En théorie, le courant présente une forme sensiblement triangulaire. En pratique et comme l'illustre la figure 2B, le courant est sensiblement sinusoïdal en raison des impédances du secteur et, plus précisément, il correspond à une crête de sinusoïde, c'est-à-dire que sa forme est sensiblement parabolique. Les pics de courant sont symétriques par rapport à leur maximum et ce maximum peut être relativement élevé.

Le document JP-A-58 046868 décrit un circuit d'alimentation à condensateur de stockage dans lequel un transistor bipolaire, intercalé sur le chemin de charge du condensateur, est commandé en tout ou rien.

Un objet de la présente invention est de prévoir un circuit d'alimentation d'une charge qui limite l'amplitude et augmente l'angle de passage des pics de courant extraits du secteur.

Un autre objet de la présente invention est de prévoir un tel circuit d'alimentation dans lequel les pics de courant extraits du secteur sont dissymétriques. L'invention vise également à ce que ces pics de courant puissent, le cas échéant, présenter un maximum au début de chaque pic.

La présente invention vise également à proposer un circuit d'alimentation dans lequel le courant de charge du condensateur de stockage est commandable indépendamment du type de charge alimentée.

Pour atteindre ces objets, la présente invention prévoit un circuit d'alimentation à condensateur de stockage comprenant, aux bornes d'un pont redresseur, un condensateur de stockage associé à un chemin de charge et à un chemin de décharge, le chemin de charge comprenant une source de courant commandable et le circuit comportant des moyens de commande de la source de courant pour que, au moins en régime établi, les périodes de charge du condensateur de stockage soient d'une durée prédéterminée.

Selon un mode de réalisation de la présente invention, le circuit comporte un moyen de détection des périodes de charge et de décharge du condensateur de stockage, et un montage comparateur commandant la valeur du courant délivré par la source, de manière à asservir les périodes de charge du condensateur sur une valeur de référence.

Selon un mode de réalisation de la présente invention, le comparateur compare la valeur moyenne d'un signal de détection à deux états, indicateurs des périodes de charge et de décharge du condensateur de stockage, par rapport à une tension de référence prédéterminée.

Selon un mode de réalisation de la présente invention, le comparateur est constitué d'un amplificateur opérationnel, monté en intégrateur du signal de détection fourni par un transistor bipolaire commandé par la tension aux bornes de la source de courant.

Selon un mode de réalisation de la présente invention, la base du transistor bipolaire est reliée, par l'intermédiaire d'une résistance, à une première borne de sortie de la source de courant, le signal de détection étant prélevé sur le collecteur du transistor bipolaire dont l'émetteur est relié à une deuxième borne de la source de courant.

Selon un mode de réalisation de la présente invention, la source de courant est un transistor MOS à canal N.

Selon un mode de réalisation de la présente invention, la diode intrinsèque du transistor MOS constitue le chemin de décharge du condensateur de stockage.

La présente invention prévoit également un procédé de commande d'un circuit d'alimentation à condensateur de stockage comprenant, aux bornes d'un pont redresseur, un condensateur de stockage associé à un chemin de charge et à un chemin de décharge, ce procédé consistant à fixer, au moins en régime établi, la durée de périodes de charge du condensateur de stockage à une durée prédéterminée.

Selon un mode de réalisation de la présente invention, le procédé consiste à asservir la valeur d'un courant de charge du condensateur de stockage pour maintenir, à chaque alternance et au moins en régime établi, la durée de charge du condensateur de stockage à la valeur prédéterminée.

Selon un mode de réalisation de la présente invention, la durée prédéterminée est au minimum de 2,17 ms, de préférence de 2,67 ms, pour une fréquence d'alimentation alternative du pont redresseur de 50 hertz.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 et 2 décrites précédemment sont destinées à exposer l'état de la technique et le problème posé ;
la figure 3 représente schématiquement un mode de réalisation d'un circuit d'alimentation d'un condensateur de stockage selon la présente invention ;
les figures 4A, 4B, 4C et 4D illustrent, sous forme de chronogrammes, le fonctionnement du circuit représenté à la figure 3 ;
la figure 5 représente un mode de réalisation d'un comparateur temporel du circuit représenté à la figure 3 ;
les figures 6A, 6B, 6C et 6D illustrent, sous forme de chronogrammes, le fonctionnement du circuit représenté à la figure 5 ;
la figure 7 représente partiellement une variante du circuit d'alimentation selon l'invention ; et
les figures 8A, 8B, 8C et 8D illustrent, sous forme de chronogrammes, le fonctionnement du circuit représenté à la figure 7.

Les mêmes éléments ont été désignés par les mêmes références aux différentes figures. Pour des raisons de clarté, seuls les éléments nécessaires à la compréhension de l'invention ont été représentés aux figures et les courbes de tension et de courant ne sont pas à l'échelle.

Une caractéristique de la présente invention est d'organiser, à chaque alternance de la tension sinusoïdale d'alimentation, la charge du condensateur de stockage pendant une durée prédéterminée. Selon l'invention, un chemin de charge du condensateur de stockage est associé à une source de courant commandable, la valeur du courant de charge étant, au moins en régime établi, ajustée automatiquement afin que le temps de charge soit maintenu constant.

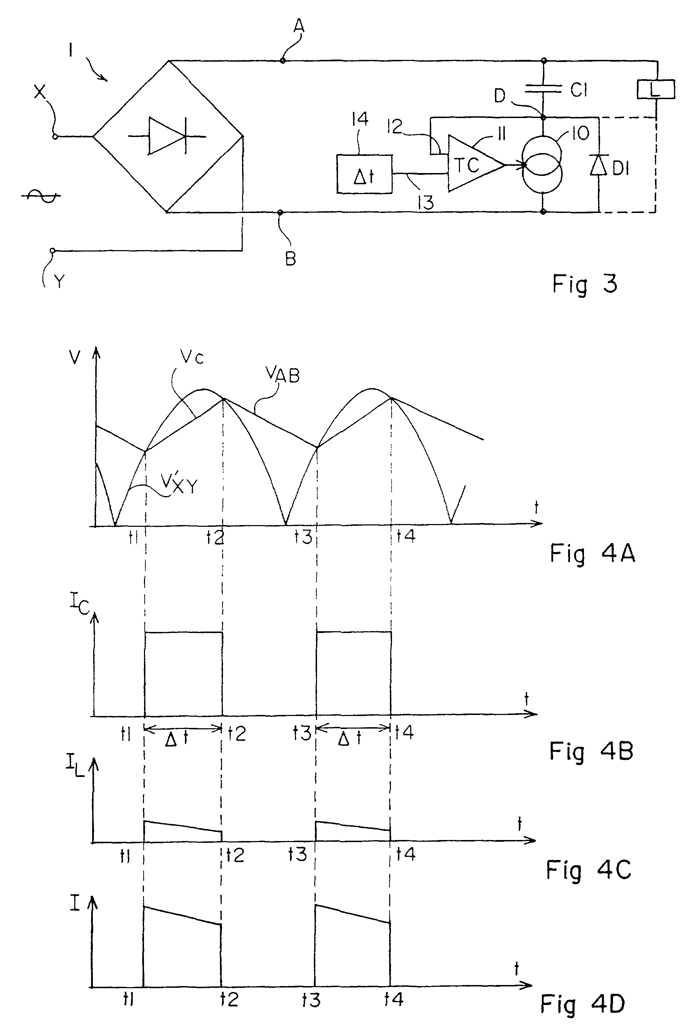

La figure 3 représente, de façon schématique, un mode de réalisation d'un circuit d'alimentation à condensateur de stockage selon la présente invention.

Le circuit comporte un pont redresseur 1 muni de bornes d'entrée X et Y et de bornes de sortie redressées A et B, un condensateur de stockage C1 et une charge L. Le condensateur C1 est associé à un trajet de décharge défini par une diode D1 et à un trajet de charge défini par une source de courant 10 commandable.

Selon l'invention, la charge L est connectée, soit aux bornes du condensateur C1, soit aux bornes A, B de sortie du pont redresseur 1. Le choix entre les deux modes de raccordement de la charge L dépend de l'application et des caractéristiques souhaitées pour l'alimentation. Par exemple, une connexion de la charge aux bornes du condensateur C1 présente un avantage particulier dans le cas où la charge L est constituée d'une alimentation à découpage, une telle connexion présentant l'avantage d'éviter le recours à un condensateur de filtrage additionnel en sortie du pont redresseur. En effet, le filtrage des parasites à hautes fréquences liés à l'alimentation à découpage est dans ce cas directement effectué par le condensateur de stockage C1. Une connexion de la charge L aux bornes A, B présente l'avantage d'engendrer une dissipation moindre dans le circuit de charge du condensateur.

La source 10 de courant est, selon l'invention, constituée d'un élément actif limitant le courant dans le trajet de charge du condensateur C1 à une valeur commandable. La source 10 est commandée par un comparateur 11 (TC) qui définit la durée de chaque période de charge du condensateur C1.

Les périodes de charge étant fixées en durée, on peut désormais élargir les pics de courant de charge à une valeur donnée. Pour ce faire, le comparateur 11 modifie la valeur du courant de la source 10 de sorte que la durée des périodes de charge correspond, au moins en régime établi, à la durée fixée.

Selon l'invention, on tire profit du fait que la fréquence de la tension d'alimentation alternative est fixée de façon très précise (par exemple, à une valeur donnée de 50 hertz ou de 60 hertz). Ainsi, la durée des périodes de charge peut être déduite de la valeur moyenne d'un signal à deux états de détection de la période (de charge ou de décharge) dans laquelle se trouve le condensateur. On peut alors comparer cette valeur moyenne à une consigne prédéterminée. En effet, le rapport entre la tension de consigne et le niveau de l'état haut du signal de détection est proportionnel au rapport entre une durée de consigne et la durée ressortant de la valeur moyenne du signal de détection. Si l'état haut du signal de détection correspond aux périodes de charge, la tension de consigne rapportée sur le niveau de l'état haut du signal de détection est proportionnelle à la durée souhaitée. Si l'état haut du signal de détection correspond aux périodes de décharge, le complément à 1 de la tension de consigne rapportée sur le niveau de l'état haut du signal de détection est proportionnel à la durée souhaitée.

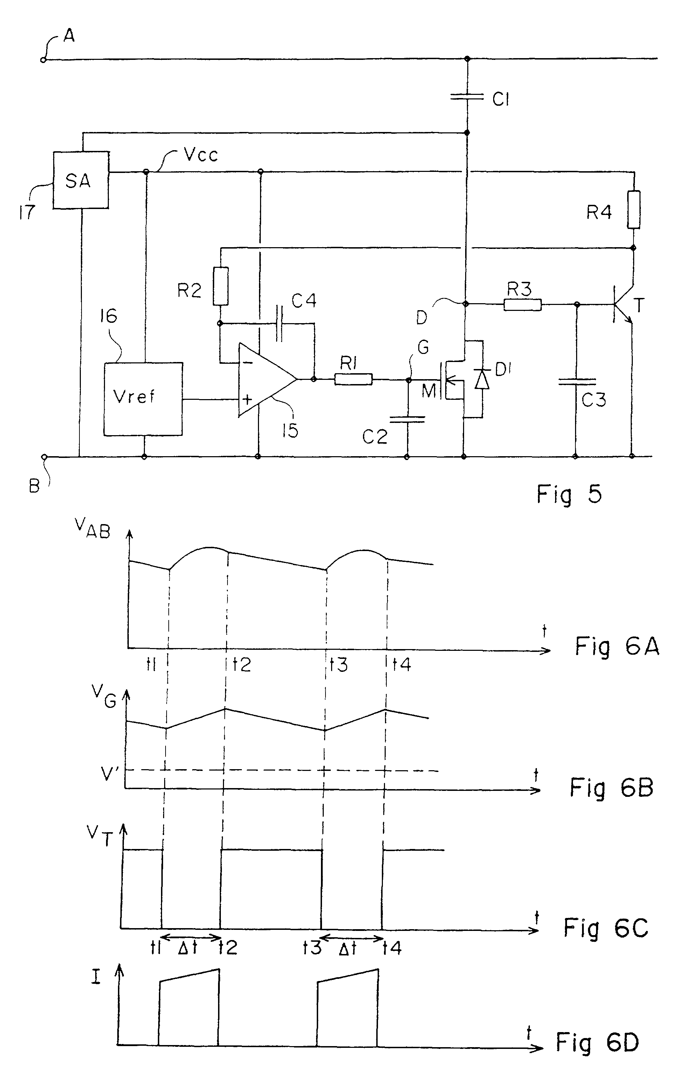

Ainsi, selon un mode de réalisation préféré, une première entrée 12 du comparateur 11 reçoit la valeur moyenne d'un signal de tension à deux états indicateurs de la période (charge ou décharge) du condensateur C1, et une deuxième entrée 13 du comparateur 11 reçoit, d'un bloc 14, une tension représentant une consigne temporelle prédéterminée (Δt) de conduction de la source 10. L'ajustement de la valeur du courant de charge par le comparateur 11 s'effectue, de préférence et comme on le verra par la suite en relation avec les figures 5 et 6, à partir d'une détection de la tension aux bornes de la source de courant 10.

Selon l'invention, pour une fréquence d'alimentation alternative de 50 hertz, la durée des périodes de charge du condensateur C1 est fixée à au moins 2,17 ms. De préférence, cette durée est fixée à une valeur d'environ 2,67 ms.

De préférence, la valeur du courant délivré par la source 10 est modifiée suffisamment lentement par rapport à la période de l'alimentation alternative, de sorte que le courant de charge du condensateur soit, au moins en régime établi, sensiblement constant pendant une période de charge.

Ainsi, si l'on se place dans des conditions similaires à celles de la figure 2, on obtient une allure de la tension V_{AB} sensiblement identique. Toutefois, comme le représente la figure 4A, le condensateur C1 étant chargé à courant sensiblement constant par la source 10, la tension V_{C} à ses bornes varie sensiblement linéairement. Le condensateur arrête de se charger pour prendre le relais de la tension d'alimentation à l'instant t2 où V_{AB} devient inférieure à V_{C}. Selon l'invention, la commande de la source de courant 10 garantit que l'instant t2 se produise, au plus tôt, à l'issue de la durée Δt après l'instant t1 de début de charge du condensateur C1.

Pendant les périodes de fourniture de courant par le condensateur C1 (périodes de décharge), la tension V_{DB} aux bornes de la source de courant 10 est négative et correspond à la chute de tension dans la diode D1 polarisée en direct. Quand la tension V_{AB} devient supérieure à la tension V_{C} (instants t1, t3), la tension V_{DB} devient positive et l'instant t1 (t3) peut donc être détecté. Quand la tension V_{AB} devient inférieure à la tension V_{C}, la tension V_{DB} redevient négative et l'instant t2 (t4) est détecté. Ces détections permettent d'asservir la valeur du courant fourni par la source 10 pour maintenir la durée Δt constante.

La figure 4B représente le courant I_{C} dans le condensateur C1 pendant les périodes de charge. Ce courant est sensiblement constant en raison de la constante de temps élevée du signal de commande de la source 10.

La figure 4C représente le courant I_{L} dans la charge pendant les périodes t1-t2 et t3-t4. Ce courant est fourni par la tension du secteur redressée. Étant donné qu'on a considéré le cas d'une alimentation régulée, la puissance dans la charge est constante. Comme, pendant les périodes t1-t2 et t3-t4, la tension V_{AB} est croissante, le courant dans la charge sera décroissant. Bien entendu, il circule aussi un courant dans la charge en dehors des périodes t1-t2 et t3-t4. Ce courant fourni par la décharge du condensateur C1 n'a pas été représenté puisque l'on veut seulement expliquer ici l'allure du courant fourni par le secteur qui est nul en dehors des périodes t1-t2 et t3-t4.

La figure 4D illustre le courant total extrait de l'alimentation redressée pendant les périodes t1-t2 et t3-t4. Ce courant I est la superposition des courants I_{L} et I_{C}. En supposant que le courant de charge du condensateur est suffisamment constant pour que les variations du courant dans la charge soient prédominantes par rapport aux variations du courant de charge du condensateur C1, chaque pic de courant présente un maximum à l'instant t1 et décroît jusqu'à l'instant t2.

Bien que l'on ait supposé ici que la puissance de la charge était constante, si cette puissance varie, les périodes de charge du condensateur C1 resteront cependant d'une durée Δt fixée, et le comparateur 11 ajustera la valeur du courant de charge fourni par la source 10 pour maintenir cette durée constante. Il en est de même en cas de variation de la tension d'alimentation.

La figure 5 représente de façon plus détaillée, un mode de réalisation du circuit d'alimentation représenté à la figure 3. A la figure 5, le pont redresseur 1 et la charge L n'ont pas été représentés.

Selon ce mode de réalisation, la source de courant (10, figure 3) commandable est constituée par un transistor MOS M, ici à canal N, monté en série avec le condensateur C1 entre les bornes A et B. Le drain (D) du transistor M constitue le point milieu de l'association en série du condensateur C1 et du transistor MOS M. La diode D1 du chemin de décharge du condensateur C1 est ici constituée par la diode intrinsèque du transistor MOS M.

Le transistor M est commandé, par exemple, par un amplificateur opérationnel 15 dont une sortie est reliée, par l'intermédiaire d'une cellule RC (R1, C2) à la grille G du transistor M. Une entrée inverseuse de l'amplificateur 15 est reliée, par l'intermédiaire d'une résistance R2 de forte valeur, au collecteur d'un transistor bipolaire T, de type NPN. L'émetteur du transistor T est relié à la borne B et sa base est reliée, par l'intermédiaire d'une résistance R3, au drain du transistor MOS. La base du transistor T est également reliée, par l'intermédiaire d'un condensateur C3, à la borne B. Le transistor T constitue un moyen de détection des périodes de charge et de décharge du condensateur C1. Un condensateur C4 relie l'entrée inverseuse de l'amplificateur 15 à sa sortie de façon à constituer un montage intégrateur, à constante de temps élevée par rapport à la période de l'alimentation alternative. Une entrée non inverseuse de l'amplificateur 15 reçoit une tension de référence Vref, fournie par un bloc 16.

Un bloc 17 d'alimentation stabilisée (SA) fournit une basse tension continue Vcc (par exemple d'environ 10 volts) d'alimentation du bloc 16 et de l'amplificateur 15, et de polarisation du transistor bipolaire T. Le bloc 17 d'alimentation stabilisée est, de préférence, alimenté entre la borne D et la borne B. Le bloc 16 comporte, par exemple, un pont diviseur résistif (par exemple constitué d'un potentiomètre) fixant la valeur Vref à partir de la tension Vcc. Une résistance R4 relie le collecteur du transistor T à la tension Vcc pour sa polarisation.

A titre de variante, la tension Vcc d'alimentation du circuit selon l'invention peut être extraite de la sortie du pont redresseur par un circuit de pompe de charge classique. Toutefois, un avantage de prélever la tension d'alimentation du bloc 17 sur le drain du transistor M est que cela ne requiert pas de condensateur haute-tension supplémentaire par rapport au condensateur C1. Cela minimise donc la dissipation du système, améliorant ainsi le rendement global.

La réalisation pratique de l'alimentation stabilisée est à la portée de l'homme du métier à partir des indications fonctionnelles données ci-dessus.

Pendant les périodes de décharge du condensateur C1, la diode D1 est polarisée en direct et le transistor T est donc bloqué. Une faible partie du courant de décharge circule dans le canal du transistor M qui, selon l'invention, est en permanence passant.

Pendant les périodes de charge du condensateur C1, le transistor T est passant (saturé) et la diode D1 est polarisée en inverse. Selon l'invention, le transistor M fonctionne alors en saturation (c'est-à-dire qu'il est plus ou moins passant selon le potentiel de sa grille).

En régime établi et en supposant que la puissance de la charge reste constante, la valeur moyenne de la tension de collecteur V_{T} du transistor T est égale à la tension de référence Vref appliquée sur l'entrée non inverseuse de l'amplificateur 15. Le signal V_{T} a la forme d'un signal carré de fréquence double par rapport à la fréquence de l'alimentation alternative. En cas de divergence entre la valeur moyenne de la tension V_{T} et la tension de référence Vref, l'amplificateur 15 modifie la tension de grille de polarisation du transistor MOS M pour retrouver cet équilibre. La résistance R1 stabilise la sortie de l'amplificateur 15 et le condensateur C2 permet de commander la grille du transistor M sous une faible impédance de manière à éviter des variations transitoires de courant, en particulier, au début (instant t1) des périodes de charge du condensateur.

Les figures 6A à 6D illustrent le fonctionnement du circuit représenté à la figure 5.

La figure 6A représente l'allure de la tension V_{AB} aux bornes de la charge (non représentée) dans un cas similaire à celui représenté à la figure 4A.

La figure 6B représente l'allure de la tension V_{G} de la grille du transistor M. La valeur V' représente le niveau de tension grille-source du transistor M à partir duquel il devient passant. La tension V_{G} est en permanence supérieure à la tension V' et on veillera à ce que les variations de la tension V_{G} soient telles que le courant dans le transistor M varie peu (par exemple, pas plus de 10%) pendant les périodes de charge.

La figure 6C représente l'allure de la tension V_{T}, et la figure 6D représente l'allure du courant I extrait de l'alimentation redressée pendant les périodes de charge du condensateur C1. Ici, les pics de courant présentent un maximum à la fin (instants t2, t4) car on a supposé que l'influence, sur le courant I, du signal triangulaire délivré par le montage intégrateur était prépondérante par rapport à l'influence de la charge.

On notera que la durée Δt des périodes de charge dépend uniquement du pont diviseur résistif fournissant la tension Vref et de la fréquence de l'alimentation alternative, qui sont tous deux très stables. Aucun autre paramètre du circuit conditionne la durée Δt, sauf en cas de paramètres sortant de la plage de fonctionnement du circuit, c'est-à-dire une tension d'alimentation trop faible, un condensateur de stockage de valeur trop faible ou une puissance de sortie trop élevée requise par la charge L.

Dès qu'au moins un de ces paramètres n'est pas respecté, par exemple pendant la période transitoire de charge initiale du condensateur C1, le transistor M est en régime linéaire, c'est-à-dire qu'il délivre un courant maximal, jusqu'à ce que le régime établi soit atteint.

Un avantage de la présente invention est que le circuit d'alimentation ne nécessite aucun signal de commande provenant de la charge. Ainsi, le circuit est indépendant du type de charge alimentée et peut être intercalé dans un circuit classique entre un pont redresseur et une charge, par exemple une alimentation à découpage, sans qu'il soit nécessaire d'apporter de modification à la charge classique pour en prélever un signal de commande.

Un autre avantage de la présente invention est qu'en fixant la durée des périodes de charge du condensateur C1, on garantit un élargissement des pics de courant prélevés sur l'alimentation pendant la charge du condensateur. De plus, ces pics de courant (figures 4D et 6D) sont dissymétriques.

A titre d'exemple particulier de réalisation, pour une alimentation alternative à la fréquence de 50 hertz, on pourra adopter pour les divers composants les valeurs suivantes :
- C2, C3 = 10 nF ;
- C4 = 100 nF ;
- R1, R4 = 10 kohms ;
- R2 = Mohms ; et
- R3 = 47 kohms.

Avec une tension Vcc de l'ordre de 10 volts, la valeur Vref fixée, par exemple par potentiomètre, est égale à 7,33 volts. Ainsi, les périodes de conduction du transistor M sont commandées de sorte que la valeur moyenne du signal V_{T} soit égale à 7,33 volts, ce qui conduit pour une période de 10 ms du signal V_{T} à des périodes (Δt) de charge du condensateur C1 de 2,67 ms.

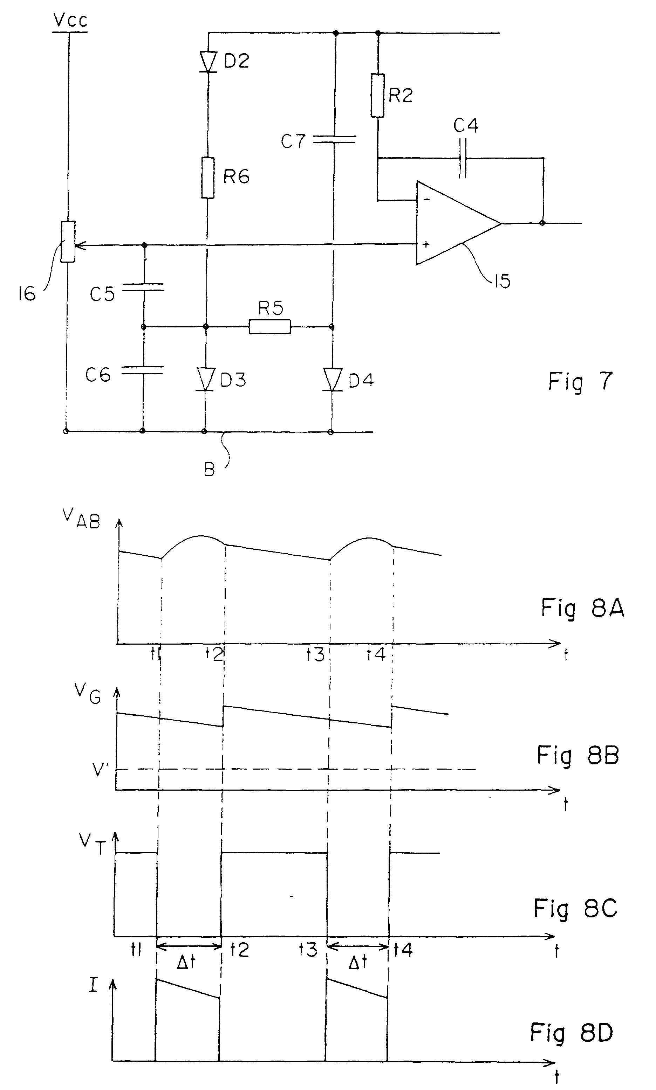

La figure 7 représente une variante du circuit d'alimentation selon l'invention, pourvu de moyens additionnels pour forcer la valeur initiale du potentiel de grille du transistor MOS à chaque alternance, et pour forcer le courant de charge du condensateur C1 à être maximal au début de chaque période de charge, de sorte à garantir que les pics dissymétriques du courant I extrait de l'alimentation redressée présentent un maximum au début. A la figure 7, seul le montage intégrateur (15, R2, C4, 16) et ces moyens additionnels ont été représentés.

Un condensateur C5 (par exemple, un condensateur chimique) dont une première borne est reliée à l'entrée non inverseuse de l'amplificateur 15 et dont une deuxième borne est reliée, par l'intermédiaire d'un condensateur C6, à la borne B, introduit, au démarrage du circuit, une constante de temps à l'apparition de la tension de référence Vref fixée par un potentiomètre 16. Cela permet de ralentir la charge du condensateur C1 (non représenté à la figure 7) de manière à éviter d'endommager le transistor MOS M au démarrage. On pourra également utiliser un détecteur de température pour protéger le transistor M contre un claquage, en particulier, dans le cas d'une réalisation sous forme de circuit intégré monolithique.

Le point milieu de l'association en série des condensateurs C5 et C6 est relié, par l'intermédiaire d'une résistance R5, à une première borne d'un condensateur C7 dont une deuxième borne est reliée au collecteur du transistor bipolaire (non représenté à la figure 7). Une diode D2, associée en série avec une résistance R6, relie la deuxième borne du condensateur C7 au point milieu de l'association en série des condensateurs C5 et C6. Deux diodes D3, D4 relient les deux bornes de la résistance R5 à la borne B.

Les figures 8A à 8D illustrent le fonctionnement d'un circuit selon l'invention, pourvu des moyens additionnels de la figure 7. La figure 8A représente l'allure de la tension V_{AB} aux bornes de la charge (non représentée) dans un cas similaire à celui représenté à la figure 4A. La figure 8B représente l'allure de la tension V_{G} de la grille du transistor M. La figure 8C représente l'allure de la tension V_{T}, et la figure 8D représente l'allure du courant I extrait de l'alimentation redressée pendant les périodes de charge du condensateur C1.

Le condensateur C7 a pour rôle de créer une rampe de tension négative aux bornes du condensateur C6 pendant les périodes de charge du condensateur C1, le transistor T étant conducteur et ramenant la deuxième borne du condensateur C7 à la masse. Quand le transistor T est bloqué, le condensateur C6 est de nouveau chargé jusqu'à sa tension de repos (de l'ordre de 0,6 volts fixée par la diode D3) par la résistance R6 et la diode D2. La rampe de tension négative est transmise par le condensateur C5 à l'entrée non inverseuse de l'amplificateur 15. L'amplitude de cette rampe étant supérieure à celle générée naturellement par l'intégrateur, la sortie de l'amplificateur 15 diminue (figure 8B) pendant les périodes de charge du condensateur C1. Par conséquent, la courant de charge présente également une rampe négative (figure 8D) avec un maximum de courant au début de chaque période de charge.

A titre d'exemple particulier de réalisation, on pourra adopter pour les divers composants ci-dessus les valeurs suivantes :
- C5 = 2,2 µF ;
- C6, C7 = 100 nF ;
- R5 = 1 Mohms ; et
- R6 = 220 kohms.

Bien entendu, la présente invention est susceptible de diverses variantes et modifications qui apparaîtront à l'homme de l'art. En particulier, le dimensionnement des différents composants du circuit d'alimentation selon la présente invention pourra être modifié en fonction de la fréquence de l'alimentation alternative et de la durée des périodes de charge souhaitée pour le condensateur de stockage. De plus, d'autres moyens de détection des périodes de charge et de décharge du condensateur de stockage pourront être utilisés, et le transistor MOS M pourra être remplacé par un autre élément limiteur de courant commandable. En outre, d'autres moyens que ceux indiqués en relation avec la figure 7 pourront être utilisés pour forcer les pics de courant à présenter un maximum au début. Par exemple, on pourra intercaler un échantilloneur-bloqueur synchronisé sur la fréquence de l'alimentation entre la sortie de l'amplificateur 15 et la résistance R1 (figure 5) ou introduire une tension compensatrice sur la grille du transistor MOS.

## Revendications

1. Circuit d'alimentation à condensateur de stockage comprenant, aux bornes d'un pont redresseur (1), un condensateur de stockage (C1) associé à un chemin de charge à source de courant (10, M) commandable et à un chemin de décharge (D1), **caractérisé en ce qu'**il comporte un moyen (T) de détection des périodes de charge et de décharge du condensateur de stockage, et un montage comparateur (15) commandant la valeur du courant délivré par la source (M), de manière à asservir les périodes de charge du condensateur sur une valeur de référence (Vref) pour que, au moins en régime établi, les périodes de charge du condensateur de stockage soient d'une durée (Δt) prédéterminée.

2. Circuit selon la revendication 1, **caractérisé en ce que** le comparateur (15) compare la valeur moyenne d'un signal de détection (V_{T}) à deux états, indicateurs des périodes de charge et de décharge du condensateur de stockage (C1), par rapport à une tension de référence (Vref) prédéterminée.

3. Circuit selon la revendication 2, **caractérisé en ce que** le comparateur est constitué d'un amplificateur opérationnel (15), monté en intégrateur (R2, C4) du signal de détection fourni par un transistor bipolaire (T) commandé par la tension (V_{DB}) aux bornes de la source de courant (10).

4. Circuit selon la revendication 3, **caractérisé en ce que** la base du transistor bipolaire (T) est reliée, par l'intermédiaire d'une résistance (R3), à une première borne (D) de sortie de la source de courant (M), le signal de détection étant prélevé sur le collecteur du transistor bipolaire (T) dont l'émetteur est relié à une deuxième borne de la source de courant.

5. Circuit selon l'une quelconque des revendications 1 à 4, **caractérisé en ce que** la source de courant (10) est un transistor MOS à canal N (M).

6. Circuit selon la revendication 5, **caractérisé en ce que** la diode intrinsèque (D1) du transistor MOS (M) constitue le chemin de décharge du condensateur de stockage (C1).

7. Procédé de commande d'un circuit d'alimentation à condensateur de stockage comprenant, aux bornes d'un pont redresseur (1), un condensateur de stockage (C1) associé à un chemin de charge (10, M) et à un chemin de décharge (D1), **caractérisé en ce qu'**il consiste à asservir la valeur d'un courant de charge du condensateur de stockage (C1) pour fixer, à chaque alternance et au moins en régime établi, la durée de charge du condensateur de stockage (C1) à une durée prédéterminée (Δt).

8. Procédé selon la revendication 7, **caractérisé en ce que** la durée prédéterminée (Δt) est au minimum de 2,17 ms, de préférence de 2,67 ms, pour une fréquence d'alimentation alternative du pont redresseur (1) de 50 hertz.

## Patentansprüche

1. Versorgungschaltung mit einem Speicherkondensator, die an den Anschlüssen einer Gleichrichterbrücke (1) einen Speicherkondensator (C1) aufweist, der einem Ladeweg mit einer steuerbaren Stromquelle (10, M) und einem Entladeweg (D1) zugeordnet ist, **dadurch gekennzeichnet, dass** sie eine Einrichtung (T) zum Erfassen der Lade- und Entladeperioden des Speicherkondensators und eine Vergleicheranordnung (15) aufweist, die den von der Quelle (M) gelieferten Stromwert steuert, um die Ladeperioden des Kondensators über einen Referenzwert (Vref) zu steuern, damit zumindest im stabilen Zustand die Ladeperioden des Speicherkondensators eine vorbestimmte Dauer (Δt) haben.

2. Schaltung nach Anspruch 1, **dadurch gekennzeichnet, dass** der Vergleicher (15) den Mittelwert eines Detektionssignales (V_{T}) bei zwei Zuständen, die Ladeperioden und Entladeperioden des Speicherkondensators (C1) angeben, in Bezug zu einer vorbestimmten Referenzspannung (Vref) vergleicht.

3. Schaltung nach Anspruch 2, **dadurch gekennzeichnet, dass** der Vergleicher durch einen Operationsverstärker (15) gebildet ist, der als Integrator (R2, C4) für das Detektionssignal ausgebildet ist, welches von einem bipolaren Transistor (T) geliefert wird, der durch die Spannung (V_{DB}) an den Anschlüssen der Stromquelle (10) gesteuert wird.

4. Schaltung nach Anspruch 3, **dadurch gekennzeichnet, dass** die Basis des bipolaren Transistors (T) über einen Widerstand (R3) mit einem ersten Anschluss (D) am Ausgang der Stromquelle (M) verbunden ist, wobei das Detektionssignal über den Kollektor des bipolaren Transistors (T) abgegriffen wird, dessen Emitter mit einem zweiten Anschluss der Stromquelle verbunden ist.

5. Schaltung nach einem der Ansprüche 1 bis 4, **dadurch gekennzeichnet, dass** die Stromquelle (10) ein MOS-Transistor (M) mit einem N-Kanal ist.

6. Schaltung nach Anspruch 5, **dadurch gekennzeichnet, dass** die intrinsische Diode (D1) des MOS-Transistors (M) den Entladeweg des Speicherkondensators (C1) bildet.

7. Verfahren zum Steuern einer Versorgungsschaltung mit einem Speicherkondensator, die an den Anschlüssen einer Gleichrichterbrücke (1) einen Speicherkondensator (C1) aufweist, der einem Ladeweg (10, M) und einem Entladeweg (D1) zugeordnet ist, **dadurch gekennzeichnet, dass** das Verfahren darin besteht, den Wert eines Ladestromes des Speicherkondensators (C1) zu regeln, um bei jeder Halbperiode und zumindest im stabilen Zustand die Ladedauer des Speicherkondensators (C1) auf eine vorbestimmte Dauer (Δt) einzustellen.

8. Verfahren nach Anspruch 7, **dadurch gekennzeichnet, dass** die vorbestimmte Dauer (Δt) bei einer Versorgung der Gleichrichterbrücke (1) mit einer Wechselfrequenz von 50 Hz zumindest 2,17 ms, vorzugsweise 2,67 ms ist.

## Claims

1. A supply circuit with a storage capacitor including, across a rectifying bridge (1), a storage capacitor (C1) associated with a charge path including a controllable current source (10, M), and with a discharge path (D1), **characterized in that** it includes means (T) for detecting the charge and discharge periods of the storage capacitor, and a comparator assembly (15) controlling the value of the current provided by the source (M), to control the charge periods of the capacitor with a reference value (Vref), so that, at least in steady state, the charge periods of the storage capacitor have a predetermined duration (Δt).

2. The circuit of claim 1, **characterized in that** the comparator (15) compares the mean value of a detection signal (V_{T}) having two states, indicative of the charge and discharge periods of the storage capacitor (C1), with a predetermined reference voltage (Vref).

3. The circuit of claim 2, **characterized in that** the comparator is formed by an operational amplifier (15), connected as an integrator (R2, C4) of the detection signal provided by a bipolar transistor (T) controlled by the voltage (V_{DB}) across the current source (10).

4. The circuit of claim 3, **characterized in that** the base of the bipolar transistor (T) is connected, via a resistor (R3), to a first output terminal (D) of the current source (M), the detection signal being taken from the collector of the bipolar transistor (T), the emitter of which is connected to a second terminal of the current source.

5. The circuit of any of claims 1 to 4, **characterized in that** the current source (10) is an N-channel MOS transistor (M).

6. The circuit of claim 5, **characterized in that** the intrinsic diode (D1) of the MOS transistor (M) forms the discharge path of the storage capacitor (C1).

7. A method of control of a supply circuit with a storage capacitor including, across a rectifying bridge (1), a storage capacitor (C1) associated with a charge path (10, M) and with a discharge path (D1), **characterized in that** it consists of controlling the value of a charge current of the storage capacitor (C1) to set, at each halfwave and at least at steady state, the charge duration of the storage capacitor (C1) to a predetermined duration (Δt).

8. The method of claim 7, **characterized in that** the predetermined duration (Δt) is at minimum 2.17 ms, preferably 2.67 ms, for an a.c. supply frequency of the rectifying bridge (1) of 50 hertz.
